# EUROPEAN PATENT APPLICATION

(11) **EP 2 398 217 A1**
(43) Date of publication of application: **21.12.2011**
(21) Application number: 10741275.1
(22) Date of filing: 04.02.2010
(51) Int. Cl.: H04M 11/00, H04M 1/00, H04M 1/275

(54) **COMMUNICATION TERMINAL, TELEPHONE DIRECTORY REGISTRATION METHOD, AND METHOD OF MANAGING COMMUNICATION TERMINALS**

(30) Priority: 10.02.2009 JP 2009028059
(71) Applicant: NEC Corporation, Tokyo 108-8001 (JP)
(72) Inventor: IWAKI, Yoshihiro, Tokyo 108-8001 (JP)
(74) Representative: Glawe, Delfs, Moll
(86) International application number: PCT/JP2010/052010
(87) International publication number: WO 2010/092998

(57) **Abstract**

The communication terminal according to the present invention includes, an electronic mail receiving means for receiving an electronic mail, a specific information inclusion judging means for judging whether a received electronic mail which the electronic mail receiving means receives includes predetermined specific information, a telephone directory data existence checking means for checking whether telephone directory data exists in the received electronic mail, and a telephone directory registering means for registering the telephone directory data in the case that each of judgment results of the specific information inclusion judging means and the telephone directory data existence checking means is affirmative.

## Description

### TECHNICAL FIELD

The present invention relates to a communication terminal such as a cellular phone and PHS, a telephone directory registering method with which a telephone directory is registered in the communication terminal, and a communication terminal handling method which is used at a time when the communication terminal receives an electronic mail.

### BACKGROUND ART

Various communication terminals such as a cellular phone, PHS (Personal Handyphone System), a computer which is equipped with a telephoning function, and PDA (Personal Digital Assistants) are prevailing. In the case of calling by use of the communication terminal, it is possible to save a work to input telephone number of the other party through registering information such as the telephone number in a telephone directory of the communication terminal. Moreover, it is possible to prevent an error when inputting the telephone number.

However, the communication terminal is a kind of information processing apparatus. Therefore, it is necessary to have knowledge on information processing to some extent in order to make and manage the telephone directory, differently from a telephone directory which is recorded on a paper. For this reason, there is a problem that user, who is not familiar with handling the information processing apparatus and has not sufficient IT literacy (Information Technology literacy), cannot utilize a telephone directory function of the communication terminal sufficiently. There is a fear, for example, that an aged person, who is not familiar with handling the information processing apparatus, cannot utilize the telephone directory function of the communication terminal sufficiently.

In the case of the aged person, one of the aged person's family in stead of the aged person often registers and manages the telephone directory of the communication terminal of the aged person. However, a case that the aged person and the family live separately is increased due to the advance of the trend toward the nuclear family. Therefore, the family seldom helps the aged person to register the telephone directory of the aged person. Moreover, many persons other than the aged person also desire to simplify the management of the telephone directory.

Accordingly, arts to make and manage the telephone directory with ease are disclosed, for example, in patent document 1 and patent document 2. According to the patent document 1, caller's telephone number and callee's telephone number are stored in a predetermined data storing area. Then, the stored telephone number is candidate data which should be registered in the telephone directory.

According to the patent document 2, an information providing apparatus, which stores various personal information, is prepared. Then, required personal information, which is acquired by the keyword search, is registered in the telephone directory.

Moreover, the art which registers the telephone number or the like in the telephone directory of the communication terminal is also disclosed in patent documents 3, 4 and 5.
Patent document 1: Japanese Patent Application Laid-Open No. 2000-174891
Patent document 2: Japanese Patent Application Laid-Open No. 2001-005832
Patent document 3: Japanese Patent Application Laid-Open No. 2001-036630
Patent document 4: Japanese Patent Application Laid-Open No. 2005-051475
Patent document 5: Japanese Patent Application Laid-Open No. 2005-072958

### DISCLOSURE OF THE INVENTION

### PROBLEM TO BE SOLVED BY THE INVENTION

By the way, a wrong telephone call with an erroneous callee's telephone number and a malicious telephone call, for example, for committing a cheat to instruct transfer of money illegally are also made to a communication terminal. A person, to whom a telephone call is seldom made from this side and whose telephone number has no necessity to be registered in the telephone directory, often telephones to this side. Therefore, the registered data of the telephone directory becomes too much unnecessarily, if the caller's telephone number is registered in the telephone directory with no consideration as described in the patent document 1. As a result, there is a strong possibility to telephone to a wrong party due to erroneous selection out of the registered data of the telephone directory. Moreover, there is a problem, in the worst case, that a person telephones to a criminal concerned, and consequently, the person is involved in a crime.

According to the patent document 2, it is necessary to collect each person's data in the information providing apparatus. For this reason, there is a fear that personal privacy is infringed through each person's information being obtained freely out of the information providing apparatus to make the telephone directory. Moreover, it is necessary for user of the communication terminal to access the special information providing apparatus, and to obtain data for making the telephone directory by carrying out the search operation.

According to the patent documents 3, 4 and 5, in order to make and manage the telephone directory, it is necessary for user of the communication terminal to carry out various processes by himself.

However, user who has insufficient IT literacy mentioned above may not be good at carrying out the processes in many cases. Therefore, there is a fear that such user can not make and manage the telephone directory sufficiently.

Accordingly, there is another proposal, which will be described in the following, as another art related to the present invention. That is, in the case that user's family is at a remote location, user has data on the telephone directory (hereinafter, referred to as telephone directory data) sent from one of the user's family by an electronic mail, after user telephones to one of the user's family or sends an electronic mail to one of the user's family. According to the related art, one of the user's family can manage a telephone directory of the communication terminal whose user has insufficient IT literacy such as an aged person. Accordingly, it is possible to judge, for example, that the telephone number which is taught the aged person as the family's telephone number by another person, who is concerned in the cheat to instruct transfer of money illegally, is wrong.

According to the related art, a person (for example, one of the family), who is requested to create registration data of the telephone number, creates telephone directory data which records the telephone number or the like corresponding to the requested contents. Then, the person sends the created telephone directory data to a person who issues the request (for example, aged person) by the electronic mail. Then, the person who issues the request stores the telephone directory data, which is included in the received electronic mail, and registers the telephone directory data in the telephone directory.

However, according to the related art, it is necessary that the request person, who receives the telephone directory data, carries out several steps of receiving the electronic mail, and storing the included telephone directory data, and registering the included telephone directory data in the telephone directory of the communication terminal. For this reason, there is a fear that the request person (for example, aged person), who cannot understand a series of operating procedures mentioned above, carries out a wrong operation. As a result, it may be impossible to register the telephone directory in some cases. For this reason, it is necessary that the requested person (for example, one of the family), who is requested to create the telephone directory data, teaches the operation procedure intelligibly by the electronic mail or the telephone call to the request person (for example, aged person) who receives the telephone directory data. As a result, there is a problem that many times and many works are necessary for both the request person and the requested person.

Moreover, according to the related art, there is a fear that, also in the case that malicious telephone directory data is sent to the request person (for example, aged person) who receives the telephone directory data, the request person registers the malicious telephone directory data in the telephone directory. For example, it is assumed that the telephone directory data, which the aged person receives, includes a telephone number which is disguised as a telephone number of the aged person's son for the cheat to instruct transfer of money illegally. In the case, there is a fear that the aged person, who is convinced that the telephone number in the telephone directory data is one of the aged person's son, telephones to the disguised telephone number, and consequently, falls victim to the cheat to instruct transfer of money illegally.

As mentioned above, to send the electronic mail, which includes the telephone directory data, causes a problem on the security, if it is requested that to send the electronic mail with the telephone directory data is used widely as a general method.

While the case that registration of the telephone directory is carried out by use of the electronic mail is described above, a case that other process is carried out by receiving the electronic mail is similar to the case of registration of the telephone directory. That is, the case of other process also causes the problem on the security similarly.

Accordingly, an object of the present invention is to provide a communication terminal, a telephone directory registering method, a communication terminal handling method, a telephone directory registering program recording medium, and a communication terminal handling program recording medium which can carry out a process, which is related to receiving an electronic mail, with simplification and in consideration to the security.

### MEANS TO SOLVE THE PROBLEM

The communication terminal according to the present invention includes, an electronic mail receiving means for receiving an electronic mail, a specific information inclusion judging means for judging whether a received electronic mail which the electronic mail receiving means receives includes predetermined specific information, a telephone directory data existence checking means for checking whether telephone directory data exists in the received electronic mail, and a telephone directory registering means for registering the telephone directory data in the case that each of judgment results of the specific information inclusion judging means and the telephone directory data existence checking means is affirmative.

The communication terminal according to the present invention includes, an electronic mail receiving means for receiving an electronic mail, a specific still picture inclusion judging means for judging whether an electronic mail, which the electronic mail receiving means receives, includes a specific still picture of a communication terminal which obeys a predetermined decision that, when sending an electronic mail, the electronic mail should include an image, which specifies an electronic mail sender, as the specific still picture, a received specific still picture displaying means for displaying the specific still picture on a received image in the case that the specific still picture inclusion judging means judges that the received electronic mail includes the specific still picture of the communication terminal, and a handling selecting means for selecting handling of the received electronic mail on the basis of contents of the specific still picture which is displayed by the received specific still picture displaying means.

The telephone directory registering method according to the present invention includes, receiving an electronic mail, judging whether the received electronic mail includes predetermined specific information, judging whether telephone directory data exists in the received electronic mail, and registering the telephone directory data in the case that it is judged that the received electronic mail includes the specific information and that the telephone directory data exists in the electronic mail.

The communication terminal handling method according to the present invention includes, receiving an electronic mail, judging whether the received electronic mail includes a specific still picture of a communication terminal which is set in advance so that, when sending an electronic mail, the electronic mail may include an image, which specifies an electronic mail sender, as the specific still picture, displaying the specific still picture on a received image in the case that the received electronic mail includes the specific still picture of the communication terminal, and selecting handling of the received electronic mail on the basis of contents of the displayed specific still picture.

The telephone directory registering program recording medium which records a program to make a computer according to the present invention execute an electronic mail receiving process for receiving an electronic mail, a specific information inclusion judging process for judging whether a received electronic mail, which is received in the electronic mail receiving process, includes predetermined specific information, a telephone directory data existence checking process for judging whether telephone directory data exists in the received electronic mail, and a telephone directory registering process for registering the telephone directory data in the case that each of judgment results in the specific information inclusion judging process and in the telephone directory data existence checking process is affirmative.

The communication terminal handling program recording medium which records a program to make a computer according to the present invention execute an electronic mail receiving process for receiving an electronic mail, a specific still picture inclusion judging process for judging whether a received electronic mail, which is received in the electronic mail receiving process, includes a specific still picture of a communication terminal which obeys a predetermined decision that, when sending an electronic mail, the electronic mail should include an image, which specifies a sender of the electronic mail, as the specific still picture, a received specific still picture displaying process for displaying the specific still picture on a received image in the case that it is judged in the specific still picture inclusion judging process that the received electronic mail includes the specific still picture of the communication terminal, and a handling selecting process for selecting handling of the electronic mail on the basis of contents of the specific still picture which is displayed in the received specific still picture displaying process.

### EFFECT OF THE INVENTION

According to the present invention, it is possible to enhance the security of the process, which is related to the electronic mail, in the communication terminal.

### BRIEF DESCRIPTION OF THE DRAWINGS

[FIG. 1] shows an example of a configuration of a communication terminal according to a first exemplary embodiment of the present invention.
[FIG. 2] shows an example of a telephone directory registering method according to the first exemplary embodiment of the present invention.
[FIG. 3] shows an example of a telephone directory registering program according to the first exemplary embodiment of the present invention.
[FIG. 4] shows an example of a configuration of a communication terminal according to a second exemplary embodiment of the present invention.
[FIG. 5] shows an example of a communication terminal handling method according to the second exemplary embodiment of the present invention.
[FIG. 6] shows an example of a communication terminal handling program according to the second exemplary embodiment of the present invention.
[FIG. 7] shows an outline of a configuration of a telephone directory registering system according to a third exemplary embodiment of the present invention.
[FIG. 8] shows an outline of a configuration of a telephone directory managing server according to the third exemplary embodiment of the present invention.
[FIG. 9] shows an outline of a configuration of a father's communication terminal according to the third exemplary embodiment of the present invention.
[FIG. 10] shows a registration process, which is carried out in the telephone directory managing server, for sending telephone directory data according to the third exemplary embodiment of the present invention.
[FIG. 11] shows a process carried out by the telephone directory managing server in the case that the father's communication terminal makes application for registration according to the third exemplary embodiment of the present invention.
[FIG. 12] shows an example of registered contents of a telephone directory automatic-registering mail address memory of the father's communication terminal according to the third exemplary embodiment of the present invention.
[FIG. 13] shows a process which is carried out in the case that an electronic mail is sent to the father's communication terminal according to the third exemplary embodiment of the present invention.
[FIG. 14] shows registered contents of a telephone directory automatic-registering mail address memory according to a fourth exemplary embodiment of the present invention.
[FIG. 15] shows a process which is carried out in the case that an electronic mail is sent to a father's communication terminal according to the fourth exemplary embodiment of the present invention.
[FIG. 16] shows a process which is carried out in the case that an electronic mail is sent to a father's communication terminal according to a fifth exemplary embodiment of the present invention.
[FIG. 17] shows an example of displaying a standby image of the father's communication terminal according to the fifth exemplary embodiment of the present invention.
[FIG. 18] shows a process which is carried out in the case that an electronic mail is sent to a father's communication terminal according to a sixth exemplary embodiment of the present invention.
[FIG. 19] shows an example of displaying a standby image of the father's communication terminal according to the sixth exemplary embodiment of the present invention.

### DESCRIPTION OF CODES

- 10 or 20: Communication terminal
- 11 and 21: Electronic mail receiving means
- 12: Specific information inclusion judging means
- 13: Telephone directory data existence checking means
- 14: Telephone directory registering means
- 22: Specific still picture inclusion judging means
- 23: Received specific still picture displaying means
- 24: Selecting means
- 30: Telephone directory registering method
- 31 and 41: Electronic mail receiving step
- 32: Specific information inclusion judging step
- 33: Telephone directory data existence checking step
- 34: Telephone directory registering step
- 40: Communication terminal handling method
- 42: Specific still picture inclusion judging step
- 43: Received specific still picture displaying step
- 44: Handling selecting step
- 50: Telephone directory registering program
- 51: and 61 Electronic mail receiving process
- 52: Specific information inclusion judging process
- 53: Telephone directory data existence checking process
- 54: Telephone directory registering process
- 60: Communication terminal handling program
- 62: Specific still picture inclusion judging process
- 63: Received specific still picture displaying process
- 64: Handling selecting process
- 100: Telephone directory registering system
- 101: Father's communication terminal
- 102₁,: 102₂ and 102₃ Base station
- 103: Communication network
- 104: Son's communication terminal
- 105: Grandchild's communication terminal
- 106: Daughter's communication terminal
- 107: Headset
- 108: Third person's communication terminal
- 109: Telephone directory managing server
- 121 and 141: CPU
- 123: Control program storing memory
- 124 and 144: Work memory
- 125 and 145: Communication control unit
- 126: Telephone directory sending program storing memory
- 127: Password, mail sender and mail receiver registering table
- 142: Bus
- 143: ROM
- 146: Telephone directory recording memory
- 147: Mail recording memory
- 148 and 148A: Telephone directory automatic-registering mail address memory
- 149: Application software storing unit
- 150: Display unit
- 151: Handling unit
- 451 and 551: Standby image
- 452: Still picture
- 453: Permission button
- 454: Refusal button
- 552: Specific still picture
- 553: Title of electronic mail
- 554: Display button
- 555: Deletion button

### Exemplary embodiment to carry out the invention

An exemplary embodiment of the present invention will be described in the following with reference to a drawing. However, the exemplary embodiment does not limit the technical scope of the present invention.

### [A first exemplary embodiment]

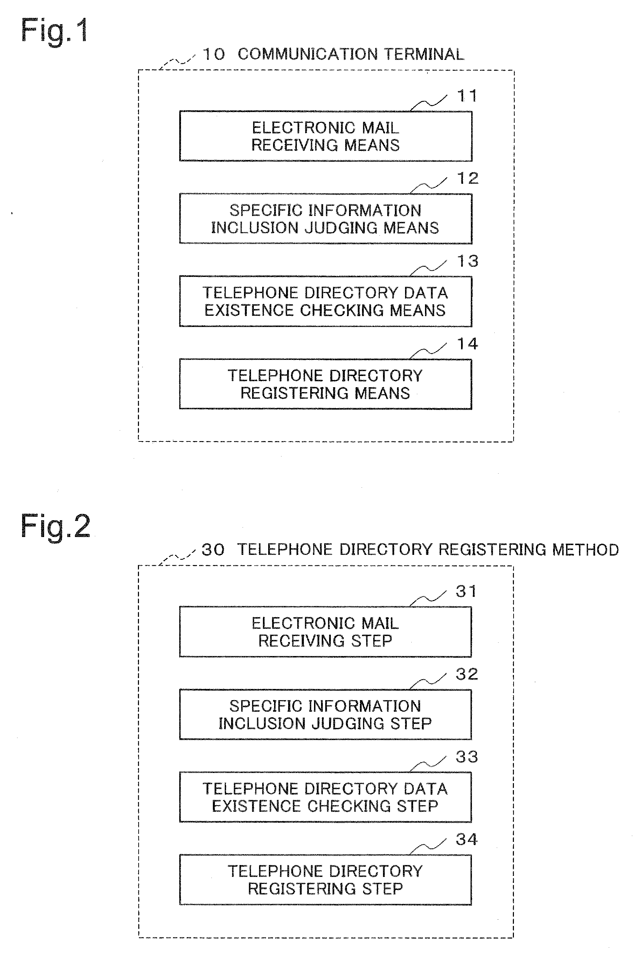

FIG. 1 shows an example of a configuration of a communication terminal according to a first exemplary embodiment of the present invention. A communication terminal 10 according to the exemplary embodiment includes an electronic mail receiving means 11, a specific information inclusion judging means 12, a telephone directory data existence checking means 13 and a telephone directory registering means 14.

The electronic mail receiving means 11 receives an electronic mail. The specific information inclusion judging means 12 judges whether the electronic mail which the electronic mail receiving means 11 receives, that is, the received electronic mail includes predetermined specific information. The telephone directory data existence checking means 13 checks whether telephone directory data exists in the received electronic mail. The telephone directory data means data to be registered in a telephone directory. In the case that both the result judged by the specific information inclusion judging means 12, and the result judged by the telephone directory data existence checking means 13 are affirmative, the telephone directory registering means 14 registers the telephone directory data. That is, in the case that the specific information inclusion judging means 12 judges that the received electronic mail includes the specific information, and furthermore, the telephone directory data existence checking means 13 judges that the telephone directory data exists in the received electronic mail, the telephone directory registering means 14 registers the telephone directory data.

FIG. 2 shows an example of a telephone directory registering method which is used by the communication terminal according to the first exemplary embodiment of the present invention. A telephone directory registering method 30 according to the exemplary embodiment includes an electronic mail receiving step 31, a specific information inclusion judging step 32, a telephone directory existence checking step 33 and a telephone directory registering step 34.

An electronic mail is received in the electronic mail receiving step 31. It is judged in the specific information inclusion judging step 32 whether the electronic mail, which is received in the electronic mail receiving step 31, includes the predetermined specific information. It is judged in the telephone directory data existence checking step 33 whether the telephone directory data exists in the received electronic mail which is received in the electronic mail receiving step 31. In the case that it is judged in the specific information inclusion judging step 32 that the received electronic mail includes the specific information, and furthermore, it is judged in the telephone directory data existence checking step 33 that the telephone directory data exists in the received electronic mail, the telephone directory data is registered in the telephone directory registering step 34.

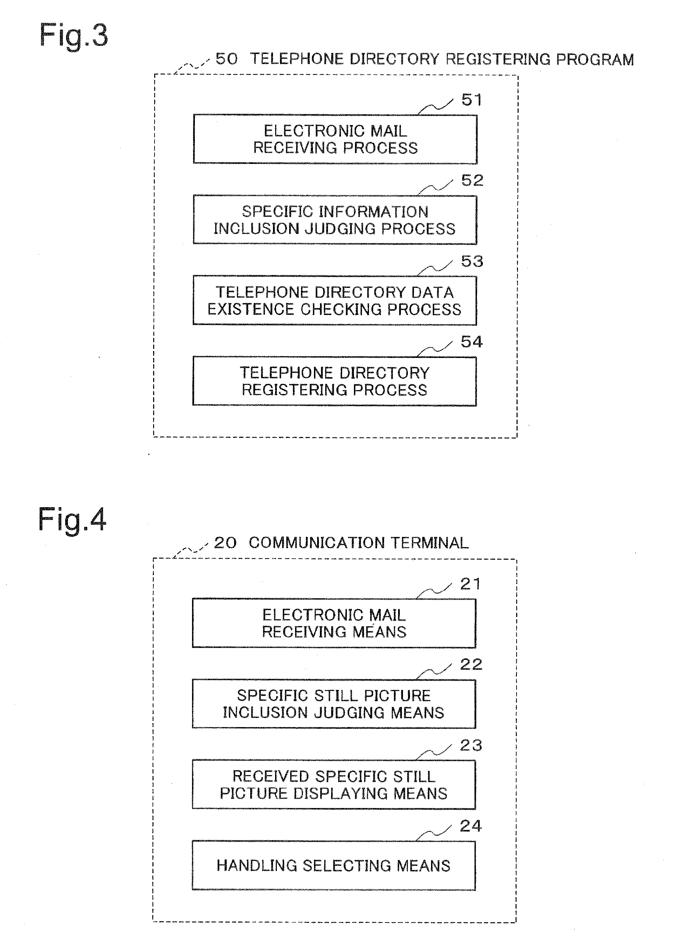

FIG. 3 shows a telephone directory registering program, which is recorded in a telephone directory registering program recording medium according to the exemplary embodiment of the present invention, to carry out the telephone directory registering method 30.

A telephone directory registering program 50 according to the exemplary embodiment makes a computer execute an electronic mail receiving process 51, a specific information inclusion judging process 52, a telephone directory data existence checking process 53 and a telephone directory registering process 54.

Then, an electronic mail is received in the electronic mail receiving step 51. It is judged in the specific information inclusion judging process 52 whether the electronic mail which is received in the electronic mail receiving process 51, that is, the received electronic mail includes the predetermined specific information. It is judged in the telephone directory data existence checking process 53 whether the telephone directory data exists in the received electronic mail. In the case that both the result judged in the specific information inclusion judging step 52, and the result judged in the telephone directory data existence checking process 53 are affirmative, the telephone directory data is registered in the telephone directory registering step 54. That is, in the case that it is judged in the specific information inclusion judging process 52 that the received electronic mail includes the specific information, and furthermore, it is judged in the telephone directory data existence checking process 53 that the telephone directory data exists in the received electronic mail, the telephone directory data is registered in the telephone directory registering process 54.

By the above mentioned configuration according to the exemplary embodiment, the telephone directory data is registered only in the case that the received electronic mail includes the predetermined specific information, and furthermore, the telephone directory data exists in the electronic mail. As a result, it is possible to enhance the security in comparison with a case that the telephone directory is registered unconditionally.

### [A second exemplary embodiment]

Next, a second exemplary embodiment of the present invention will be described. FIG. 4 shows an example of a configuration of a communication terminal according to the second exemplary embodiment of the present invention.

A communication terminal 20 according to the exemplary embodiment includes an electronic mail receiving means 21, a specific still picture inclusion judging means 22, a received specific still picture displaying means 23 and a handling selecting means 24.

The electronic mail receiving means 21 receives an electronic mail. The specific still picture inclusion judging means 22 judges whether the electronic mail which the electronic mail receiving means 21 receives, that is, the received electronic mail includes a specific still picture of a communication terminal which obeys a decision that an image, which identifies a sender, should be included in an electronic mail as the specific still picture at a time when the electronic mail is sent. In the case that the specific still picture inclusion judging means 22 judges that the received electronic mail includes the specific still picture, the received specific still picture displaying means 23 displays the received specific still picture on a received image. On the basis of contents of the specific still picture displayed by the received specific still picture displaying means 23, the handling selecting means 24 selects handling of the electronic mail.

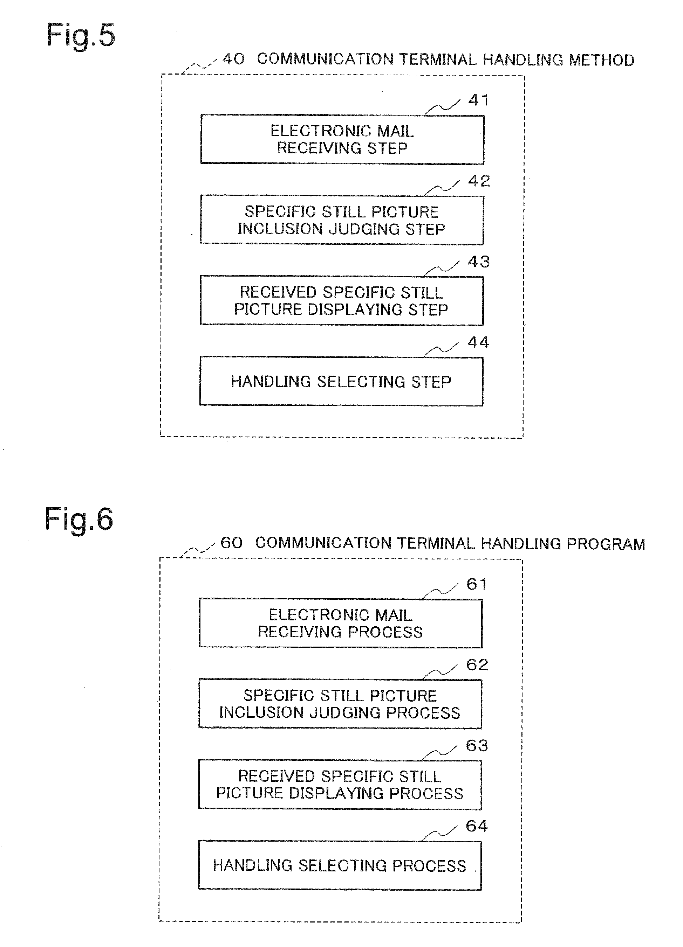

FIG. 5 shows a communication terminal handling method which is used in the communication terminal 20 according to the exemplary embodiment of the present invention. A communication terminal handling method 40 according to the exemplary embodiment includes an electronic mail receiving step 41, a specific still picture inclusion judging step 42, a received specific still picture displaying step 43 and a handling selecting step 44.

An electronic mail is received in the electronic mail receiving step 41. It is judged in the specific still picture inclusion judging step 42 whether the electronic mail, which is received in the electronic mail receiving step 41, includes the specific still picture of the communication terminal which obeys the decision that the image, which identifies the sender, should be included in the electronic mail as the specific still picture at the time when the electronic mail is sent. When it is judged in the specific still picture inclusion judging step 42 that the received electronic mail includes the specific still picture of the communication terminal, the specific still picture is displayed on the received image in the received specific still picture displaying step 43. Handling of the electronic mail is selected in the handling selecting step 44 on the basis of the contents of the specific still picture which is displayed in the received specific still picture displaying step 43.

FIG. 6 shows a communication terminal handling program, which is recorded in a communication terminal handling program recording medium according to the exemplary embodiment, to carry out the communication terminal handling method 40.

A communication terminal handling program 60 according to the exemplary embodiment makes a computer execute an electronic mail receiving process 61, a specific still picture inclusion judging process 62, a received specific still picture displaying process 63 and a handling selecting process 64.

An electronic mail is received in the electronic mail receiving process 61. It is judged in the specific still picture inclusion judging process 62 whether the electronic mail which is received in the electronic mail receiving process 61, that is, the received electronic mail includes the specific still picture of the communication terminal which obeys the decision that the image, which identifies the sender, should be included in the electronic mail as the specific still picture at the time when the electronic mail is sent. When it is judged in the specific still picture inclusion judging process 62 that the received electronic mail includes the specific still picture of the communication terminal, the specific still picture is displayed on the received image in the received specific still picture displaying process 63. Handling of the electronic mail is selected in the handling selecting process 64 on the basis of the contents of the specific still picture which is displayed in the received specific still picture displaying process 63.

According to the above mentioned configuration, the communication terminal according to the exemplary embodiment makes the electronic mail include the specific still picture as the image which identifies the sender of the electronic mail. Then, the communication terminal in the receive side displays the included specific still picture on the screen. On the basis of the displayed contents, handling of the electronic mail can be selected. Therefore, it is possible to enhance the security of the process related to receiving the electronic mail.

### [A third exemplary embodiment]

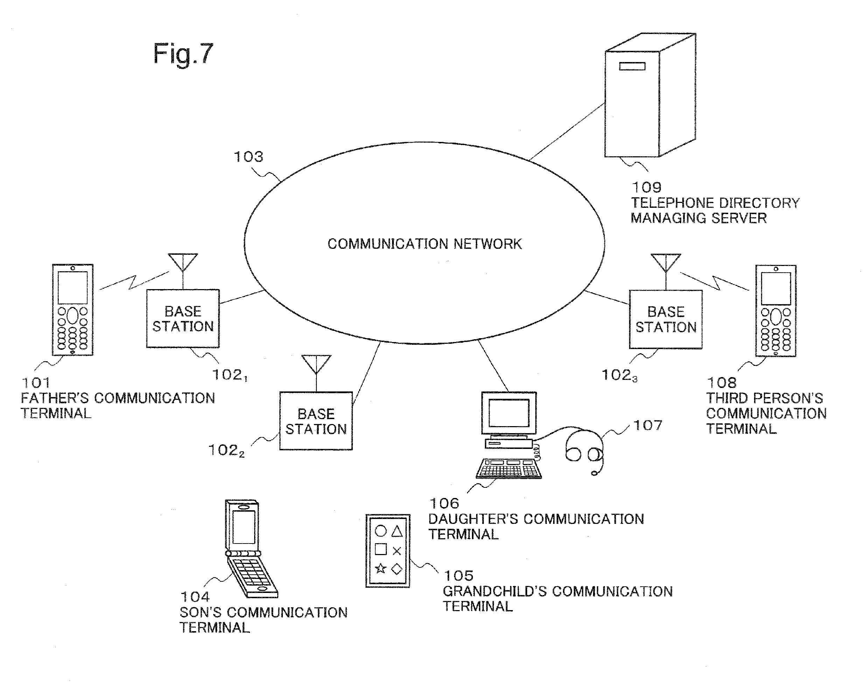

Next, a third exemplary embodiment of the present invention will be described. FIG. 7 shows an outline of a configuration of a telephone directory registering system according to the third exemplary embodiment of the present invention.

A telephone directory registering system 100 will be described in the following through taking it an exemplified case that one of a family of a father, who is an aged person, registers and updates a telephone directory of a father's communication terminal 101.

The father's communication terminal 101 can be connected to a communication network 103 such as a cellular phone network via a near base station 102₁. A son's communication terminal 104 and a grandchild's communication terminal 105 can be connected to the communication network 103 via a predetermined base station 102₂. Moreover, a daughter's communication terminal 106 is connected to the communication network 103.

According to the exemplary embodiment, the father's communication terminal 101, the son's communication terminal 104 and the grandchild's communication terminal 105 are portable type radio communication terminals respectively. The daughter's communication terminal 106 includes a personal computer which is connected always to the communication network 103, and a headset 107. Therefore, the daughter's communication terminal 106 can telephone and send and receive an electronic mail via the internet. Third person's communication terminal 108 also can be connected to the communication network 103 via other predetermined base station 102₃.

According to the telephone directory registering system 100 of the exemplary embodiment, a telephone directory managing server 109 is connected to the communication network 103. The telephone directory managing server 109 manages the telephone directories of various communication terminals. In order to ensure the security, only a registered member can access the telephone directory managing server 109.

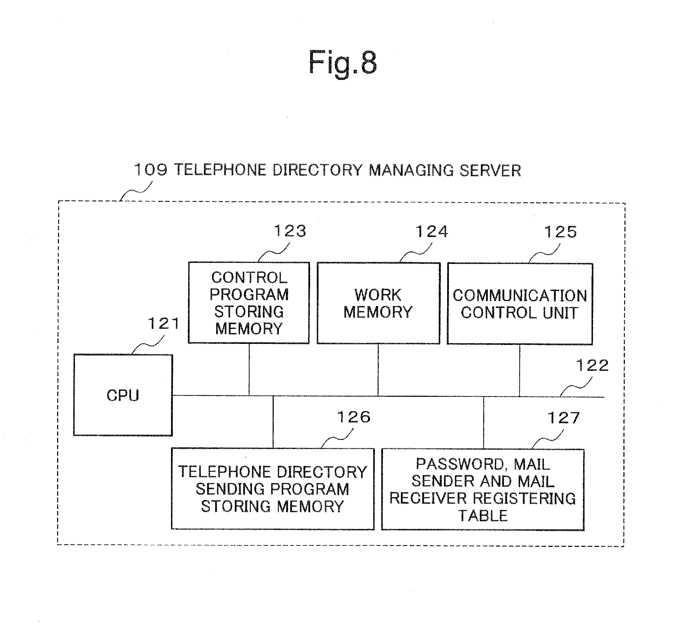

FIG. 8 shows an outline of a configuration of the telephone directory managing server according to the exemplary embodiment. The configuration of the telephone directory managing server shown in FIG. 8 will be described in the following with reference to FIG. 7.

The telephone directory managing server 109 includes CPU 121 (Central Processing Unit 121) which is equipped with a communication function. CPU 121 is connected with each unit of the telephone directory managing server 109 via a bus 122 such as a data bus. A control program storing memory 123 out of the units stores a control program. CPU 121 executes various control for managing the telephone directory through executing the control program. A work memory 124 stores various data which are necessary temporarily when CPU 121 executes the control. A communication control unit 125 sends and receives data to and from the various terminals such as the father's communication terminal 101 via the communication network 103. A telephone directory sending program storing memory 126 stores an original of the telephone directory sending program which is downloaded to a communication terminal which obtains a membership of the system. A password, mail sender and mail receiver registering table 127 registers a member's password, and a mail sender and a mail receiver who are corresponding to the password.

According to the exemplary embodiment, it is assumed, for example, that the son's communication terminal 104 makes all of or a part of the telephone directory (hereinafter, referred to as a telephone directory for convenience) of the father's communication terminal 101, and sends the telephone directory to the father's communication terminal 101. In the case, the father has a membership, and registers a relation between the password and the son, who is the mail sender, in the password, mail sender and mail receiver registering table 127. A procedure for registration is easy if the procedure for registration is carried out with a son's help when the son visits the father. Or, it may be preferable that the son in stead of the father carries out the procedure for registration with father's consent. This will be described later.

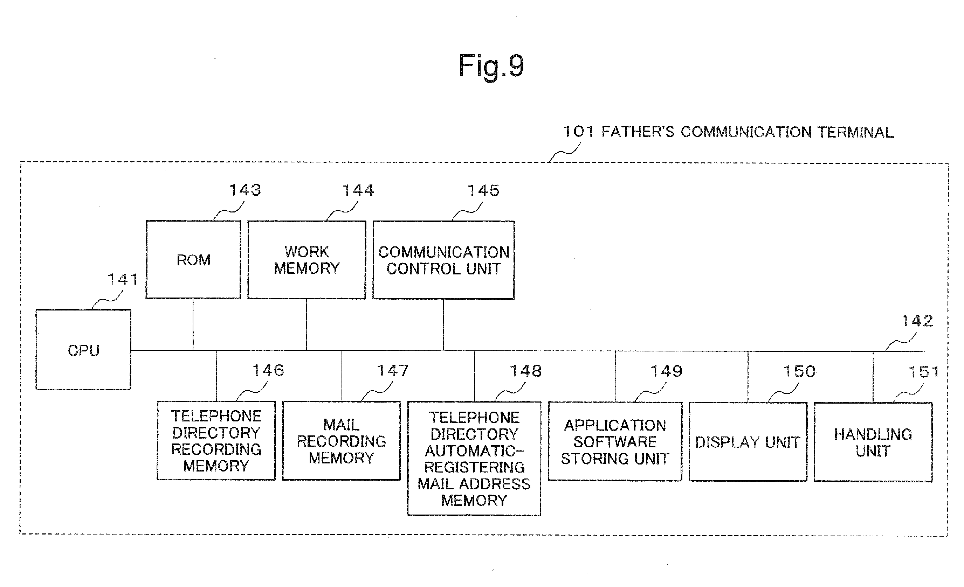

FIG. 9 shows an outline of a configuration of the father's communication terminal. The configuration of the father's communication terminal shown in FIG. 9 will be described with reference to FIG. 7.

The father's communication terminal 101 is equipped with CPU 141. CPU 141 is connected to each unit of the apparatus via a bus 142. ROM (Read Only Memory 143) out of the units stores various control programs which CPU 141 executes, and fixed data such as a dictionary which is used for kana-kanji conversion or the like. A work memory 144 is composed of RAM (Random Access Memory). RAM, which composes the work memory 144, stores various data which are necessary temporarily when CPU 141 executes the program. A communication control unit 145 is a circuit for connecting to the telephone directory managing server 109 and the communication terminal such as the son's communication terminal 104 via the communication network 103 and the base station such as the base station 102₁ to send and receive data. A telephone directory recording memory 146 records data related to the telephone directory. A mail recording memory 147 records mail data. The telephone directory recording memory 146 and the mail recording memory 147 are, for example, the non-volatile memories.

A telephone directory automatic-registering mail address memory 148 stores an electronic mail address which is related to registering the telephone directory. The telephone directory automatic-registering mail address memory 148 is composed of, for example, the non-volatile memory. The telephone directory automatic-registering mail address memory 148 stores one mail address or a plurality of mail addresses which make it possible to register the telephone directory of the father's communication terminal 101 correspondingly to the registered contents of the password, mail sender and mail receiver registering table 127 shown in FIG. 8. An application software storing unit 149 is corresponding to a memory area which stores various application software. According to the exemplary embodiment, in the case that the father, who holds the father's communication terminal 101, obtains the membership of the telephone directory registering system 100, a dedicated application software for registering the telephone directory is downloaded from the telephone directory managing server 109. The dedicated application software is stored in the application software storing unit 149. The father's communication terminal 101 includes furthermore a display unit 150 which is composed of a display such as the liquid crystal display, and a handling unit 151 which is composed of various key switches.

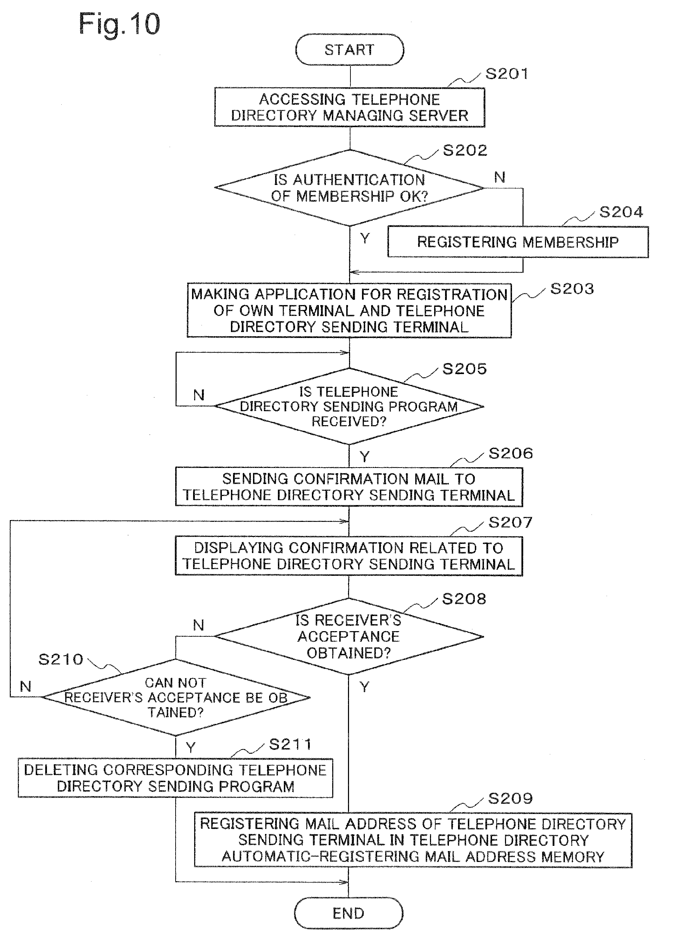

FIG. 10 shows a registration process in the telephone directory managing server for sending the telephone directory to the father's communication terminal. The registration process shown in FIG. 10, which is carried out in the telephone directory managing server, will be described in the following with reference to FIGs. 7 to 9.

It is assumed that, when the son who holds the son's communication terminal 104 meets the father who holds the father's communication terminal 101, the son tells the father that it is convenient to use the telephone directory of the father's communication terminal 101 when the father telephones. Moreover, it is assumed that the son sends the telephone directory data after the son is provided with a copy of a telephone directory of a fixed-line telephone by the father. Moreover, it is assumed that the father obtains the membership of the telephone directory registering system 100 so that the son may send the telephone directory data.

In the case, the son handles the father's communication terminal 101 to make the father's communication terminal 101 connected to the communication network 103, and then, accesses the telephone directory managing server 109 (Step S201) with the father's consent. When the father's communication terminal 101 is connected to the telephone directory managing server 109, the membership is checked (Step S202). It is assumed that the father has the membership of the telephone directory registering system 100. In the case, a pair of the father's communication terminal 101 as the terminal to which the telephone directory is sent, and the son's communication terminal 104 as the terminal which sends the telephone directory by the electronic mail is applied for the registration (Step S203), at a time when the check results in OK (success) (Y in Step S202). In the case that the father has not the membership (N in Step S202), the father is applied for registration as the member (Step S204), and afterward, the process of Step S203 is carried out.

While a pair of the father's communication terminal 101 and the son's communication terminal 104 is applied for the registration on the assumption that the son's communication terminal 104 sends the telephone directory data by use of the electronic mail according to the exemplary embodiment, the present invention is not limited to the exemplary embodiment. That is, in the case that it is suitable that the daughter or the grandchild sends the telephone directory data, it is also possible that the son handles the father's communication terminal 101 to make application of the daughter's communication terminal 106 or the grandchild's communication terminal 105, which is associated with the father's communication terminal 101, for the registration with the daughter's or the grandchild's consent. Of course, it is also possible that each of the daughter's communication terminal 106 and the grandchild's communication terminal 105 can be registered in association with the father's communication terminal 101. In the case, it is possible that a plurality of communication terminals manage registration of the telephone directory of the father's communication terminal 101.

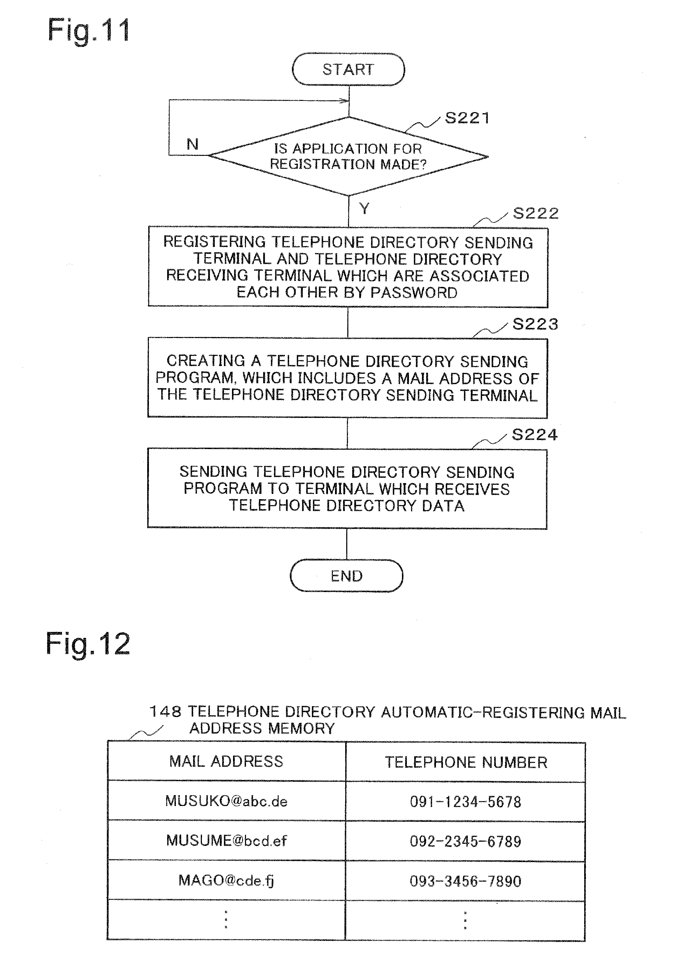

FIG. 11 shows a process carried out by the telephone directory managing server in the case that the father's communication terminal makes application for the registration. The process by the telephone directory managing server shown in FIG. 11 will be described with reference to Figs. 7 to 10. It is assumed in this description that the telephone directory sending terminal is the son's communication terminal 104.

The telephone directory managing server 109 waits for receiving an application for the registration which is based on Step S203 (Step S221). In the case that the telephone directory managing server 109 receives the application for the registration (Y in Step221), the telephone directory managing server 109 associates both the terminal (father's communication terminal 101) to which the telephone directory data is sent, and the telephone directory sending terminal (Son's communication terminal 104) which sends the telephone directory data with a password which is registered at a time of the application for the registration. Then, the association is registered in the password, mail sender and mail receiver registering table 127 (Step S222). Next, the original of the telephone directory sending program, which is stored in the telephone directory sending program storing memory 126, is read. Then, a telephone directory sending program, which is corresponding to the original of the telephone directory sending program including a mail address of the telephone directory sending terminal (son's communication terminal 104), is created (Step S223). The created telephone directory sending program is sent to the terminal (father communication terminal 101) which has the telephone directory data sent (Step S224). As a result, a series of processes is completed (end).

The description is continued with returning to FIG. 10. When the father's communication terminal 101 receives the telephone directory sending program corresponding to the own terminal (father's communication terminal 101) and the telephone directory sending terminal (Y in step S205), the father's communication terminal 101 stores the received telephone directory sending program in the application software storing unit 149 and carries out the received program. Then, the father's communication terminal 101 sends a confirmation mail to the son's communication terminal 104 in order to confirm that the son's communication terminal is set as the telephone directory sending terminal which sends the telephone directory to the father's communication terminal 101 (Step S206). Then, the son' communication terminal 104 receives the confirmation mail from the father's communication terminal 101.

Meanwhile, a confirmation message related to the confirmation mail to the telephone directory sending terminal is shown on the display unit 150 of the father's communication terminal 101 after sending the confirmation mail by use of the electronic mail to the son's communication terminal 104 (Step S207). The confirmation message is, for example, "Since the electronic mail is sent to the telephone directory sending terminal, please check by telephoning whether the telephone directory sending terminal receives the electronic mail.". Afterward, the father checks whether the son communication terminal 104 receives the confirmation mail through telephoning to the son. For example, in the case that the daughter's communication terminal 106 in stead of the son's communication terminal 104 is set as the telephone directory sending terminal, the father telephones to the daughter to check whether the confirmation mail is received. Since it is assumed in the description that the son carries out the process for registration in the telephone directory managing server 109 by use of the father's communication terminal 101 in cooperation with the father, it is easily confirmed on the spot without telephoning to the son that the son's communication terminal 104 receives the confirmation mail by the electronic mail.

In the case that the confirmation message is sent to the son communication terminal 104, a handler of the father's communication terminal 101 pushes "receiver acceptance button" (not shown in the figure.) displayed on the display unit 150 (Y in Step S208). As a result, the mail address of the telephone directory sending terminal (son's communication terminal 104) is registered in the telephone directory automatic-registering mail address memory 148 (Step S209). As a result, a series of processes is completed (end).

On the other hand, the son's communication terminal 104 may not receive the confirmation message in some cases. Or, there is a case that the electronic mail receiver dose not consent like the son refuses to send the telephone directory. In these cases (N in Step S208), "receiver not-acceptance button" (not shown in the figure) is pushed (Y in Step S210). At this time, the corresponding telephone directory sending program is deleted from the application software storing unit 149 (Step S211). As a result, a series of processes is completed (end).

It is possible to omit the above-mentioned process to send the confirmation message to the telephone directory sending terminal, and to obtain the consent of the holder of the telephone directory sending terminal. However, it is possible, through carrying out the process, to prevent a situation that the father's communication terminal receives the telephone directory data from an unrelated communication terminal, for example, third person's communication terminal, and consequently, the received telephone directory is registered with no consent of the father. In the case that the son sets the daughter's communication terminal 106 as the telephone directory sending terminal with no consent of the daughter, it is possible to obtain the consent of the daughter at a time when the confirmation mail is received. In the case that the consent is not obtained, the corresponding telephone directory sending program becomes unnecessary. Therefore, the telephone directory sending program is deleted from the father's communication terminal 101.

FIG. 12 shows an example of registered contents of the telephone directory automatic-registering mail address memory of the father's communication terminal. The mail addresses and the telephone numbers of the son's communication terminal 104, the daughter's communication terminal 106 and the grandchild's communication terminal 105, by use of which the telephone directory of the father's communication terminal 101 shown in FIG. 7 can be registered automatically, are registered in the telephone directory automatic-registering mail address memory 148. As a result, it is possible in the case to manage the telephone directory of the father's communication terminal 101 by use of the son' communication terminal 104, the daughter's communication terminal 105, and the grandchild communication terminal 106.

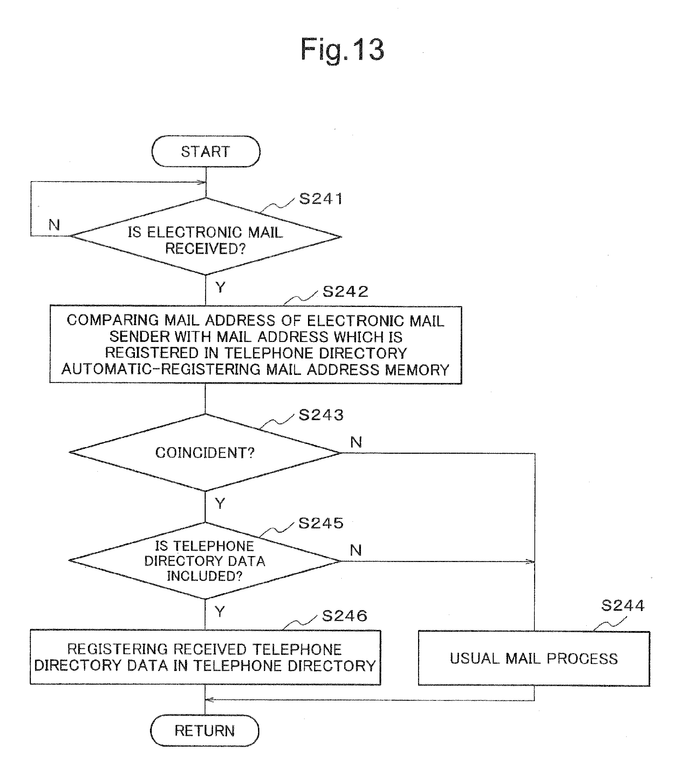

FIG. 13 shows a process which is carried out in the case that an electronic mail is sent to the father's communication terminal. The process, which is carried out in the case that the electronic mail is sent to the father's communication terminal shown in FIG. 13, will be described with reference to FIG. 7, FIG. 9 and FIG. 12.

The communication control unit 145 of the father's communication terminal 101 waits for receiving an electronic mail (Step S241). When the father's communication terminal 101 receives the electronic mail (Y in Step S241), the father's communication terminal 101 checks whether the sender's mail address is coincident with any one of the mail addresses which are registered in the telephone directory automatic-registering mail address memory 148 (Step S242). For example, in the case that the electronic mail is sent from the daughter's communication terminal 106, the sender's mail address is coincident with the mail address of "MUSUME@bcd.ef". In the case that the sender's mail address is not coincident with any one of the mail addresses which are registered in the telephone directory automatic-registering mail address memory 148 (N in Step S243), the received mail is not the electronic mail related to the registration of the telephone directory. In the case, the usual mail process is carried out (Step S244). Then, the father's communication terminal 101 goes back to the state of waiting for receiving a next electronic mail (return).

A case that the mail address of the received electronic mail is coincident with any one of the mail addresses which are registered in the telephone directory automatic-registering mail address memory 148 (Y in Step S243) will be described in the following. In the case, it is judged whether the electronic mail includes the telephone directory data (Step S245). In the case that the electronic mail does not includes the telephone directory data (N in Step 5245), the usual mail process is carried out (Step S244), since the received electronic mail is not related to the registration of the telephone directory.

On the other hand, in the case that the electronic mail includes the telephone directory data (Y in Step S245), CPU 141 executes the telephone directory sending program which is stored in the application software storing unit 149. That is, CPU 141 makes the telephone directory data, which is included in the electronic mail, registered in the telephone directory which is stored in the telephone directory recording memory 146 (Step S246). Then, the father's communication terminal 101 goes back to the state of waiting for receiving a next electronic mail (return). Specifically, when the telephone directory is not registered in the telephone directory recording memory 146, a new telephone directory is made on the basis of data such as the telephone number and the name which compose the received telephone directory data. On the other hand, in the case that the telephone directory has been already made in the telephone directory memory 146, data such as the telephone number and the name, which compose the telephone directory data sent this time, is added to the telephone directory as additional information.

While the comparison (Step S242) of the sender's mail address of the received electronic mail with the mail address registered in the telephone directory automatic-registering mail address memory 148 is carried out first according to the process of receiving the telephone directory data shown in FIG. 13, the present invention is not limited to the process. That is, it may be preferable to carry out the process of checking whether the telephone directory data is included in the electronic mail in Step S245, before the process of Step S242 is carried out.

Next, a case that third person sends telephone directory data to the father's communication terminal 101 by use of the third person's communication terminal 108 in the telephone directory registering system 100 according to the exemplary embodiment will be described. In the case, a mail address of third person's communication terminal 108 is not registered in the telephone directory automatic-registering mail address memory 148. Therefore, the sender's mail address of the received electronic mail is not coincident with the registered mail address at all in Step S243 of FIG. 13 (N in Step S243). Therefore, the telephone directory is not changed unfairly. That is, even if third person, who holds the third person's communication terminal 108, pretends to be the son in order to commit the cheat to instruct transfer of money illegally, and tries to change the telephone number and the mail address of the son's communication terminal 104 by use of the address book, it is impossible to change the telephone number and the mail address.

Next, it is assumed that third person pretends to be the son to send the electronic mail to the father's communication terminal 101 by use of the third person's communication terminal 108, and tries to register the telephone directory of the father's communication terminal 101 unfairly. In the case, the father accesses the telephone directory managing server 109 on the basis of the description which is written in the received electronic mail (Step S201 in FIG. 10). Then, the father registers the electronic mail address of the son's communication terminal 104 in Step S203. In the case that the right mail address of the son is written in the description of the electronic mail, the confirmation mail is sent from the father's communication terminal 101 to the son in Step S205. Accordingly, a fact that third person tries to create the telephone directory data of the father's communication terminal 101 unfairly is revealed at this point of time. In the case, it is possible to delete the corresponding telephone directory sending program from the father's communication terminal 101 through the father's selecting the "receiver not-acceptance button".

In the case that a mail address, which is different from the son's mail address, is written falsely as the son's mail address in the description of the electronic mail which the father receives from third person, the father's communication terminal 101 sends the confirmation mail to the false mail address (Step S205). Accordingly, a fact that third person tries to disguise the telephone directory data of the father's communication terminal 101 is revealed at a time when the father telephones to the son according to a confirmation display in Step S207. Since the telephone directory data, which is sent from third person, is not registered in the telephone directory of the father's communication terminal 101 at this point of time, the father telephones by use of the unchanged telephone directory. Since the father telephones not to third person but to the son for the reason in the case, the fact is revealed. Accordingly, it is possible, also in this case, to delete the corresponding telephone directory sending program from the father's communication terminal 101 through the father's selecting "receiver not-acceptance button".

Of course, if third person writes a false telephone number in the electronic mail as a new telephone number of the son in the case, third person, who holds the false telephone number, responds to the father's telephoning. At this time, a possibility that third person makes the father push the "receiver acceptance button" (Y in Step S208) through cheating the father can not be denied completely. However, both a situation that the father asks the son to help the father with a work of the registration of the telephone directory or the son proposes the help, and a situation that the son needs money urgently seldom take place simultaneously. Accordingly, it is conceivable that the father can respond to third person' voice and third person's talk with comparative calmness. Therefore, it is quite difficult, according to the exemplary embodiment, that third person makes the telephone directory of the father's communication terminal 101 unfairly and registers the unfair telephone number.

As described above, the telephone directory data, which is included in the electronic mail, is registered automatically in the communication terminal according to the exemplary embodiment. For this reason, it is possible to make a receiver's operating load disappear. Moreover, according to the exemplary embodiment, only the telephone directory data, which is included in the electronic mail whose sender's mail address is registered in the telephone directory automatic-registering mail address memory 148 in advance, is an object of the automatic registration. Therefore, the registered telephone directory data is quite reliable. Moreover, the telephone directory registering system 100 according to the exemplary embodiment uses the existing service except for an arrangement of the telephone directory managing server 109. Accordingly, the telephone directory registering system 100 according to the exemplary embodiment can be realized easily only by development of software which is stored in the telephone directory sending program storing memory 126 of the telephone directory managing server 109. Moreover, according to the exemplary embodiment, it is possible to realize the system with cheap cost, since it is not necessary to develop a new network service and it is also not necessary that the sender takes a new action.

While the telephone directory sending program, which includes the destination address of the electronic mail, is created correspondingly to each of the destination addresses (Step S223 in FIG. 11) in order to send the confirmation mail in Step S205 according to the exemplary embodiment, the present invention is not limited to the exemplary embodiment. That is, even if a plurality of the telephone directory sending terminals exist, it is also possible to send one predetermined telephone directory sending program to each telephone directory sending terminal as a common program.

### [A fourth exemplary embodiment]

Next, a fourth exemplary embodiment of the present invention will be described. In a description on the exemplary embodiment, a configuration and an operation common to ones of the third exemplary embodiment are omitted.

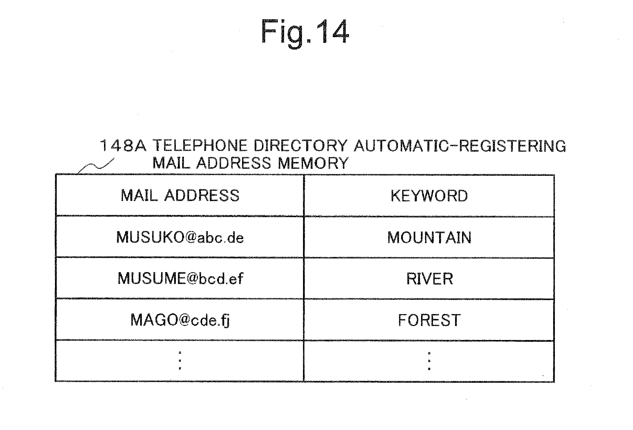

FIG. 14, which is corresponding to FIG. 12 according to the third exemplary embodiment, shows contents of a telephone directory automatic-registering mail address memory according to the fourth exemplary embodiment of the present invention. A part of description in FIG. 14, which is the same as one in FIG. 12, is omitted. According to a telephone directory automatic-registering mail address memory 148A of the exemplary embodiment, a telephone number is not an object of the registration. A keyword (identification information), which a person concerned decides in advance by use of a communication means such as the telephone and the facsimile, is an object of the registration in stead of the telephone number. It is prescribed that the keyword should be included in a title of an electronic mail which is sent with including telephone directory data, or should be included at an appropriate position of a main body of the electronic mail.

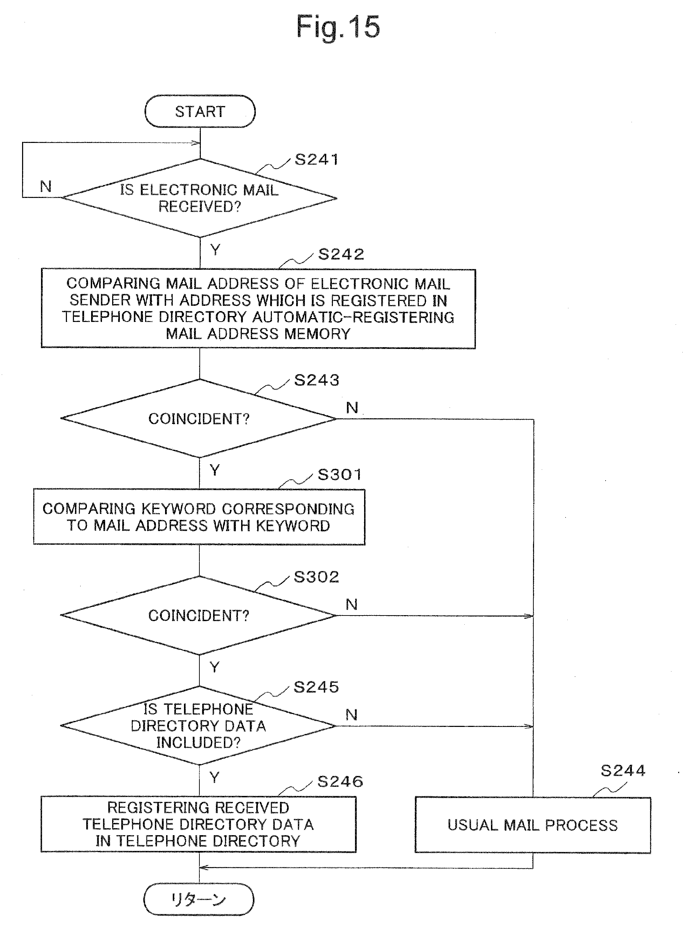

FIG. 15 shows a process which is carried out in the case that an electronic mail is sent to a father's communication terminal according to the exemplary embodiment of the present invention. A step in FIG. 15, which is the same as one in FIG. 13, has the same step number, and then, description on the same step in FIG. 15 is omitted. The process shown in FIG. 15, which is carried out in the case that the electronic mail is sent to the father's communication terminal, will be described with reference to FIG. 7, FIG. 9 and FIG. 14.

The communication control unit 145 of the father's communication terminal 101 waits for receiving an electronic mail (Step S241). When the father's communication terminal 101 receives the electronic mail (Y in Step S241), the father's communication terminal 101 checks whether a sender's mail address is coincident with any one of mail addresses which are registered in the telephone directory automatic-registering mail address memory 148A (Step S242). For example, in the case that the electronic mail is sent from the daughter's communication terminal 106, the sender's mail address is coincident with the mail address of "MUSUME@bcd.ef". In the case that the sender's mail address is not coincident with any one of the mail addresses which are registered in the telephone directory automatic-registering mail address memory 148 (N in Step S243),the received electronic mail is not related to registration of a telephone directory. In the case, CPU 141 executes the usual mail process (Step S244). Then, the father's communication terminal 101 goes back to the state of waiting for receiving a next electronic mail (return).

A case that the mail address of the received electronic mail is coincident with any one of the mail addresses which are registered in the telephone directory automatic-registering mail address memory 148A (Y in Step S243) will be described in the following. In the case, the father's communication terminal 101 checks furthermore whether characters, which are included in the title of the electronic mail or at the appropriate position of the main body of the electronic mail, are coincident with the keyword which is registered in the telephone directory automatic-registering mail address memory 148 in association with the mail address (Step S301). For example, if the electronic mail is sent from the daughter's communication terminal 106, "river" is registered in the telephone directory automatic-registering mail address memory 148A shown in FIG. 14 as the keyword. Therefore, the father's communication terminal 101 checks whether the title of the electronic mail includes the same keyword as "telephone directory registration river".

In the case that the keyword is coincident consequently (Y in Step S302), the father's communication terminal 101 judges whether the telephone directory data is included in the received electronic mail (Step S245). In the case that the keyword is not coincident (N in Step S302), the received electronic mail is not related to the registration of the telephone directory similarly to the case that the telephone directory data is not included in the received electronic mail as shown in FIG. 13 (N in Step S245). In the case, the usual mail process is carried out (Step S244).

A process after Step 244 is similar to the process shown in FIG. 13. Moreover, it is apparent that order of a plurality of checks, which are carried out in the process of receiving the telephone directory data shown in FIG. 15, may be changed appropriately. Moreover, it may be preferable that data, which designates a place where the keyword is embedded, may be registered in the telephone directory automatic-registering mail address memory 148A shown in FIG. 14, in the case that the place where the keyword is embedded is able to be changed variously.

### [A fifth exemplary embodiment]

Next, a fifth exemplary embodiment of the present invention will be described. In a description on the exemplary embodiment, a configuration and an operation common to ones of the third exemplary embodiment are omitted.

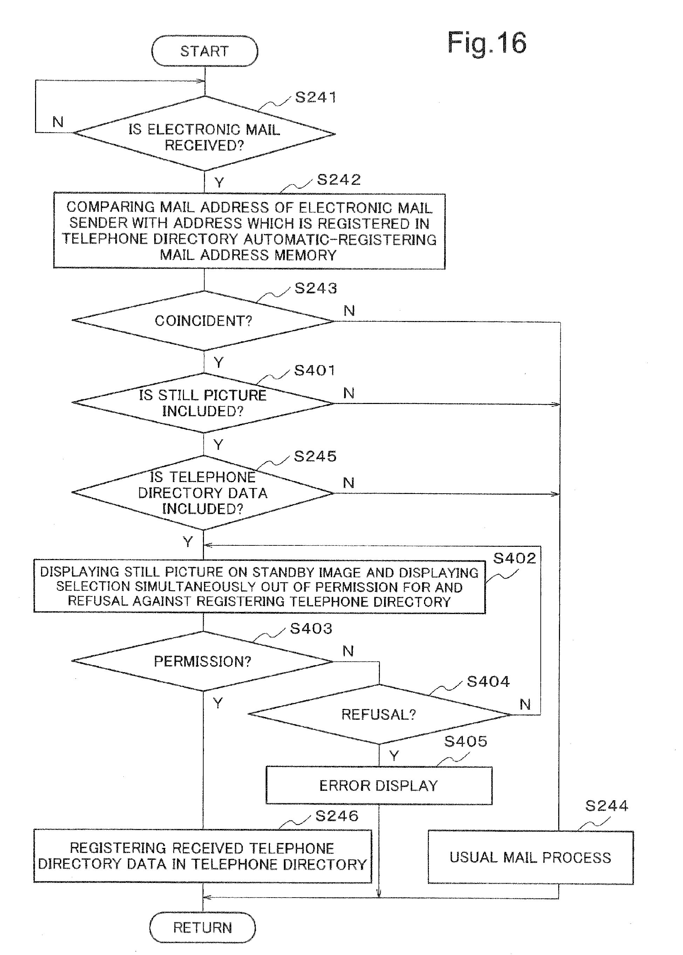

FIG. 16 shows a process which is carried out in the case that an electronic mail is sent to a father's communication terminal according to the exemplary embodiment of the present invention. A step in FIG. 16, which is the same as one in FIG. 13, has the same step number, and description on the same step in FIG. 15 is omitted. The process shown in FIG. 16, which is carried out in the case that the electronic mail is sent to the father's communication terminal, will be described in the following with reference to FIG. 7, FIG. 9 and FIG. 12.

The communication control unit 145 of the father's communication terminal 101 waits for receiving an electronic mail (Step S241). When the father's communication terminal 101 receives the electronic mail (Y in Step S241), the father's communication terminal 101 checks whether a sender's mail address is coincident with any one of the mail addresses which are registered in the telephone directory automatic-registering mail address memory 148 (Step S242). For example, in the case that the electronic mail is sent from the daughter's communication terminal 106, the sender's mail address is coincident with the mail address of "MUSUME@bcd.ef". In the case that the sender's mail address is not coincident with any one of the mail addresses which are registered in the telephone directory automatic-registering mail address memory 148 (N in Step S243), the received mail is not related to registration of a telephone directory. Accordingly, CPU 141 executes the usual mail process (Step S244). Then, the father' communication terminal 101 goes back to the state of waiting for receiving a next electronic mail (return).

A case that the mail address of the received electronic mail is coincident with any one of the mail addresses which are registered in the telephone directory automatic-registering mail address memory 148 (Y in Step S243) will be described in the following. In the case, CPU 141 checks whether the received electronic mail includes a still picture (Step S401). According to the exemplary embodiment, it is prescribed in advance that a person, who sends telephone directory data by an electronic mail, should send the electronic mail which includes an own still picture. In the case that the electronic mail does not include the still picture (N in Step S401), the operation advances towards Step S244 to carry out the usual mail process.

In the case the electronic mail includes the still picture (Y in Step S401), the father's communication terminal 101 judges whether the electronic mail includes telephone directory data (Step S245). In the case that the electronic mail does not include the telephone directory data (N in Step S245), the father' communication terminal 101 judges that the received electronic mail is an usual electronic mail which includes an usual still picture, and consequently, CPU 141 executes the usual mail process (Step S244).

On the other hand, in the case that the electronic mail includes the telephone directory data (Y in Step S245), CPU 141 makes the included still picture displayed on a standby image of the display unit 150 of the father's communication terminal 101. Moreover, CPU141 makes a button, which is used for selection out of registering the telephone directory, and not registering the telephone directory, displayed on the standby image (Step S402).

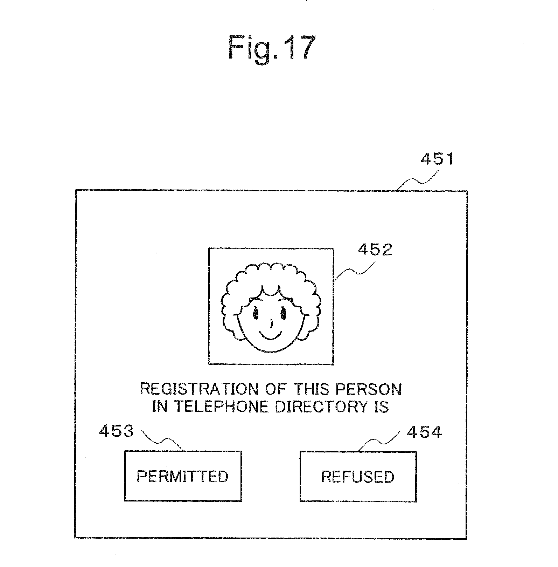

FIG. 17 shows an example of displaying the standby image of the father's communication terminal. A still picture 452, which is included in the electronic mail by the electronic mail sender, is displayed on a standby image 451 which is displayed on the display unit 150 shown in PIG. 9. A permission button 453 and a refusal button 454, which a person who is displayed on the still picture 452 uses for selection out of permission for registering the telephone directory and refusal against registering the telephone directory, are displayed under a display area of the still picture 452. Description is continued with going back to FIG. 16 with reference to FIG. 17.

In this state, the father's communication terminal 101 monitors which of the permission button 453 and the refusal button 454 is pushed (Step S403 and Step S404). If the father confirms that a person displayed by the still picture 452 is one of the family whose electronic mail address is registered in the telephone directory automatic-registering mail address memory 148, the father pushes the permission button 453 (Y in Step S403). In the case, CPU 141 registers the telephone directory data attached to the electronic mail in the telephone directory of the telephone directory recording memory 146 (Step S246).

It is assumed that third person sends an electric mail, which includes a false sender's mail address, to the father's communication terminal 101 by use of third person's communication terminal 108. In the case, it is usual that third person does not possess a picture of the person who is registered in the telephone directory recording memory 146. In the case that third person sends an electronic mail which includes a picture of different person who is not registered, the father can find the pretense out easily, and consequently pushes the refusal button 454 (N in Step S403 and Y in Step S404). In the case, CPU 141 executes an error display (Step S405). Then, the father's communication terminal 101 goes back to the state of waiting for receiving a next electronic mail (return).

Since CPU 141 makes the image of the person, who holds the telephone directory sending terminal, displayed according to the exemplary embodiment described above, it is possible to authenticate the person securely. Accordingly, it is possible to ensure the sufficient security, even if the process, which is described in Step S205, to send the confirmation mail to the telephone directory sending terminal is omitted.

While the still picture attached to the electronic mail displays the sender according to the exemplary embodiment, the present invention is not limited to the still picture which displays the sender. That is, it is enough that the still picture attached to the electronic mail is associated with predetermined user (for example, one of the family or the like). That is, a still picture, by which the receiver of the electronic mail (for example, father) can confirm that the sender of the electronic mail is the predetermined user (for example, one of the family or the like), is preferable. Therefore, it may be preferable that the still picture is, for example, a photograph of a family's house and an image of a family's pet.

### [A sixth exemplary embodiment]

Next, a sixth exemplary embodiment of the present invention will be described. In a description on the exemplary embodiment, a configuration and an operation common to ones of the third exemplary embodiment are omitted.

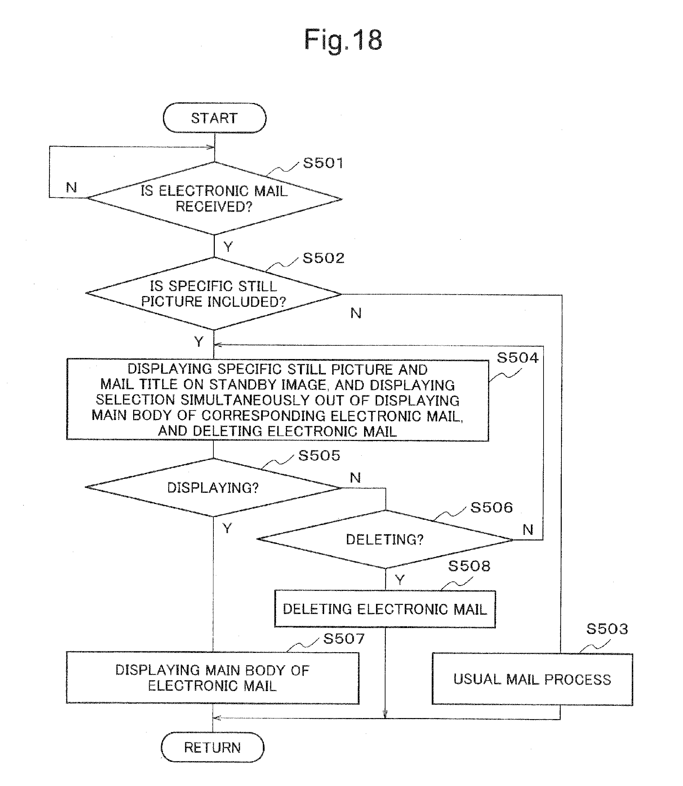

FIG. 18 shows a process which is carried out in the case that a father's communication terminal receives an electronic mail. The process shown in FIG. 18, which is carried out in the case that the father's communication terminal receives the electronic mail, will be described in the following with reference to FIG. 7 and FIG. 9.

The communication control unit 145 of the father's communication terminal 101 waits for receiving an electronic mail (Step S501). When the father's communication terminal 101 receives the electronic mail (Y in Step S501), the father's communication terminal 101 judges whether the electronic mail includes a specific still picture of a predetermined image format and predetermined number of pixels which are based on a specification common to an electronic mail sending communication terminal and an electronic mail receiving communication terminal (Step S502). In the case that the electronic mail does not includes the specific still picture (N in Step S502), the usual mail process is carried out (Step S503). Then, the father's communication terminal 101 goes back to the state of waiting for receiving a next electronic mail (return).

In the case that the received electronic mail includes the specific still picture (Y in Step S502), a title of the electronic mail and the included specific still picture are displayed on a standby image of the display unit 150 of the father's communication terminal 101. Buttons, which are used for selection out of displaying a main body of the electronic mail, and deleting the electronic mail, are also displayed on the standby image (Step S504).

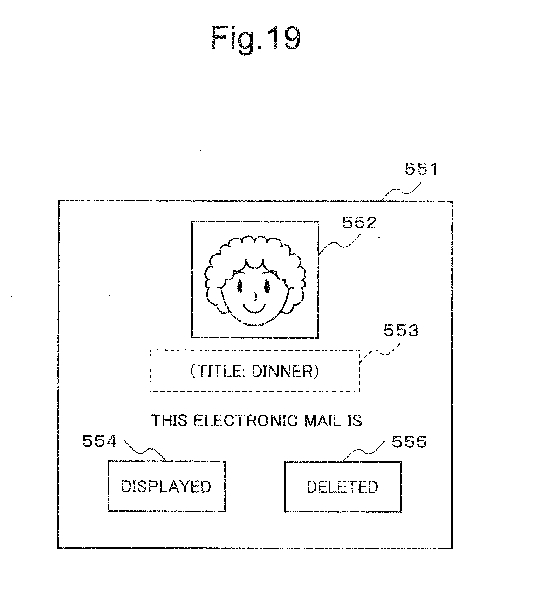

FIG. 19 shows an example of displaying the standby image of the father's communication terminal according to the exemplary embodiment. A specific still picture 552 attached to the electronic mail by an electronic mail sender, and a title of the electronic mail 553 are displayed on a standby image 551 which is displayed on the display unit 150 shown in FIG. 9. A display button 554 and a deletion button 555 are displayed in a display area which is positioned under the title 553 of the electronic mail. The display button 554 is used for displaying the main body of the electronic mail which is sent from the sender who is displayed in the specific still picture 552. The deletion button 555 is used for deleting the electronic mail. The description is continued with going back to FIG. 18 with reference to FIG. 19.

In this state, the father communication terminal 101 monitors which of the display button 554 and the deletion button 555 is pushed (Step S505 and Step S506). In the case that the father confirms that the specific still picture 552 displays an acquaintance such as one of the family, the father pushes the display button 554 (Y in Step S505). In the case, the main body of the electronic mail is displayed on the standby image 551 (Step S507).Then, the operation goes back to Step S501 again (return).

Then, it is assumed that third person sends an electronic mail, which includes a mail address of a false sender, to the father's communication terminal 101 by use of the third person's communication terminal 108. In the case, it is usual that third person does not make the specific still picture 552 attached to the electronic mail, or contents of the image are different from the acquaintance such as one of the family even if third person attaches the specific still picture to the electronic mail. Consequently, it is possible that the father can judge intuitionally at a glance that the electronic mail is sent from an unrelated person. Moreover, it is possible to judge on the basis of the title of the electronic mail to some extent whether the father needs the main body of the electronic mail. That is, in the case that an unnecessary electronic mail is received, the father can find easily that the received electronic mail is unnecessary. Therefore, it is possible that the father can push the deletion button 555 (N in Step S505 and Y in Step S506) to delete the corresponding electronic mail (Step S508). When the electronic mail is deleted, the operation goes back to Step S501 again (return).

Moreover, it is possible that the communication terminal, which sends the specific still picture 552, is set in advance so that a built-in camera may photograph a specific still picture 552 when a button for sending the electronic mail is pushed, and the specific still picture may be attached to the electronic mail and sent. By use of such setting, the image, which is used for authenticating the electronic mail sender and which is associated with the main body of the electronic mail, is sent at each time of sending the electronic mail. Accordingly, the receiver can judge easily that the received mail is pretended, and consequently, can delete the electronic mail.

Moreover, the setting is effective also in the case that a person who holds a communication terminal encounters a crime. That is, when encountering a crime, by carrying out the process to send the electronic mail even if the main body of the electronic mail is blank, it is possible to send the specific still picture 552, which indicates a situation of a crime scene, to a destination. As a result, it is possible to inform the communication terminal, which one of the family holds, of occurrence of the emergency by the image data.

While the electronic mail receiving person carries out the selection out of displaying the main body of the mail, and deleting the electronic mail according to the exemplary embodiment, the present invention is not limited to the exemplary embodiment. That is, it may be preferable, for example, that the electronic mail receiving person judges on the basis of the specific still picture whether it is possible to input data, which is sent from the sender by use of the electronic mail, into the communication terminal or not, and whether it is possible to make the communication terminal execute the sent program or not.

While the present invention has been described with reference to the exemplary embodiment mentioned above, the present invention is not limited to the above-mentioned exemplary embodiment. It is possible to add various modifications, which are apparent to a person skilled in the art, to the composition and the details of the present invention within the scope of the present invention.

This application is based upon and claims the benefit of priority from Japanese Patent Application No. 2009-028059, filed on February 10, 2009, the disclosure of which is incorporated herein in its entirety by reference.

## Claims

1. A communication terminal comprising:
an electronic mail receiving means for receiving an electronic mail;
a specific information inclusion judging means for judging whether a received electronic mail which the electronic mail receiving means receives includes predetermined specific information;
a telephone directory data existence checking means for checking whether telephone directory data exists in the received electronic mail; and
a telephone directory registering means for registering the telephone directory data in the case that each of judgment results of the specific information inclusion judging means and the telephone directory data existence checking means is affirmative.

2. The communication terminal according to claim 1 further comprising:
a specific information registering means for registering the specific information, wherein
the specific information inclusion judging means judges that the received electronic mail includes the specific information in the case that the received electronic mail includes information which is coincident with any one of the specific information registered in the specific information registering means.

3. The communication terminal according to claim 1 or claim 2, wherein
the specific information is an electronic mail address of an electronic mail sender.

4. The communication terminal according to claim 1 or claim 2, wherein the specific information is an electronic mail address of an electronic mail sender, and identification information which is predetermined per the electronic mail sender.

5. The communication terminal according to claim 1, further comprising:
a still picture displaying means for displaying contents of a still picture when the electronic mail includes the still picture; and
a still picture and user association existence inputting means for inputting whether the still picture is associated with specific user or not, wherein
the specific information inclusion judging means judges that the received electronic mail includes the specific information in the case that the still picture and user association existence inputting means inputs that the still picture is associated with the specific user.

6. A communication terminal comprising:
an electronic mail receiving means for receiving an electronic mail;
a specific still picture inclusion judging means for judging whether an electronic mail, which the electronic mail receiving means receives, includes a specific still picture of a communication terminal which obeys a predetermined decision that, when sending an electronic mail, the electronic mail should include an image, which specifies an electronic mail sender, as the specific still picture;
a received specific still picture displaying means for displaying the specific still picture on a received image in the case that the specific still picture inclusion judging means judges that the received electronic mail includes the specific still picture of the communication terminal; and
a handling selecting means for selecting handling of the received electronic mail on the basis of contents of the specific still picture which is displayed by the received specific still picture displaying means.

7. The communication terminal according to claim 6, wherein the handling selecting means is means for selecting whether to display contents of the received electronic mail or delete the received electronic mail.

8. The communication terminal according to claim 6 or claim 7, wherein the specific still picture is photographed by a photograph means, which is mounted on a communication terminal held by the sender of the received electronic mail, at a time when the sender sends the received electronic mail.

9. A telephone directory registering method comprising:
receiving an electronic mail;
judging whether the received electronic mail includes predetermined specific information;
judging whether telephone directory data exists in the received electronic mail; and
registering the telephone directory data in the case that it is judged that the received electronic mail includes the specific information and that the telephone directory data exists in the electronic mail.

10. A communication terminal handling method comprising:
receiving an electronic mail;
judging whether the received electronic mail includes a specific still picture of a communication terminal which is set in advance so that, when sending an electronic mail, the electronic mail may include an image, which specifies an electronic mail sender, as the specific still picture;
displaying the specific still picture on a received image in the case that the received electronic mail includes the specific still picture of the communication terminal; and
selecting handling of the received electronic mail on the basis of contents of the displayed specific still picture.

11. A telephone directory registering program recording medium which records a program to make a computer execute:
an electronic mail receiving process for receiving an electronic mail;
a specific information inclusion judging process for judging whether a received electronic mail, which is received in the electronic mail receiving process, includes predetermined specific information;
a telephone directory data existence checking process for judging whether telephone directory data exists in the received electronic mail; and
a telephone directory registering process for registering the telephone directory data in the case that each of judgment results in the specific information inclusion judging process and in the telephone directory data existence checking process is affirmative.

12. A communication terminal handling program recording medium which records a program to make a computer execute:
an electronic mail receiving process for receiving an electronic mail;
a specific still picture inclusion judging process for judging whether a received electronic mail, which is received in the electronic mail receiving process, includes a specific still picture of a communication terminal which obeys a predetermined decision that, when sending an electronic mail, the electronic mail should include an image, which specifies a sender of the electronic mail, as the specific still picture;
a received specific still picture displaying process for displaying the specific still picture on a received image in the case that it is judged in the specific still picture inclusion judging process that the received electronic mail includes the specific still picture of the communication terminal; and
a handling selecting process for selecting handling of the electronic mail on the basis of contents of the specific still picture which is displayed in the received specific still picture displaying process.
